# EUROPÄISCHE PATENTSCHRIFT

(11) **EP 2 502 480 B1**
(45) Veröffentlichungstag und Bekanntmachung des Hinweises auf die Patenterteilung: **23.04.2014**
(21) Anmeldenummer: 12401043.0
(22) Anmeldetag: 19.03.2012
(51) Int. Cl.: A01C 7/04

(54) **Pneumatische Einzelkornsämaschine**
Pneumatic single grain seeder
Semoir monograine pneumatique

(30) Priorität: 25.03.2011 DE 102011001555
(43) Veröffentlichungstag der Anmeldung: 26.09.2012
(73) Patentinhaber: Amazonen-Werke H. Dreyer GmbH & Co. KG, 49205 Hasbergen (DE)
(72) Erfinder: Mertens, Daniel, 26135 Oldenburg (DE); Wilken, Martin, 26123 Oldenburg (DE)

(56) Entgegenhaltungen:
- WO-A1-2011/031214
- DE-A1-102009 043 881
- FR-A1- 2 491 721
- US-A- 5 915 312

## Beschreibung

Die Erfindung betrifft eine pneumatische Einzelkornsämaschine gemäß des Oberbegriffes des Patentanspruches 1.

Eine derartige Einzelkornsämaschine ist durch die DE 10 2009 043 881 A1 bekannt. Diese Einzelkornsämaschine weist eine Vereinzelungstrommel auf. In der Oberfläche der Vereinzelungstrommel sind in Perforationsreihen Perforationen angeordnet, an welcher sich aufgrund einer Druckdifferenz zwischen dem Innenraum und dem Außenraum der Trommel auf der Außenseite der Trommel Saatkörner zu deren Vereinzelung an den Perforationen anlagern. In dem Bereich, an dem die an den Perforationen an gelagerten vereinzelten Saatkörner an mit einem Förderluftstrom beaufschlagte Ausbringleitungen übergeben werden, ist jeweils auf der Innenseite der Vereinzelungstrommel im Bereich der jeweiligen Perforationsreihe eine drehbar gelagerte Rolle einer Saatgutablöseeinrichtung zur Ablösung der an der Perforationen anhaftenden Saatkörner durch Unterbrechung der den Perforationen anliegenden Druckdifferenz angeordnet.

Die Rollen dieser Saatgutablöseeinrichtung sind zumindest in ihrem äußeren Bereich aus einem elastischen Material hergestellt. Die Elastizität reicht nicht immer aus, um das Saatgut in gewünschter gleichmäßiger Weise den Ausbringleitungen zuzuführen und somit in gewünschter gleichmäßiger Weise im Boden abzulegen.

Der Erfindung liegt die Aufgabe zu Grunde, mit einfachen Maßnahmen sicherzustellen, dass die von den Perforationen abgelösten Saatkörner sicher den jeweiligen Ausbringleitungen zugeleitet und sich nicht an Perforationen hinter der Rolle der Saatgutablöseeinrichtung anlagern können.

Diese Aufgabe wird erfindungsgemäß durch die kennzeichnenden Merkmale des Anspruches 1 gelöst.

Infolge dieser Maßnahme können die Rollen aufgrund ihres zumindest äußeren flexibel ausgebildeten Bereiches durch das Anpressen gegen die Innenseite der Trommeloberfläche der Vereinzelungstrommel sich an die Trommeloberfläche anpassen und durch die Verformung ihrer Oberfläche zumindest zwei hintereinander liegende Perforationen jeder Perforationsreihe zur Unterbrechung der an den Perforationen anliegenden Druckdifferenz abdecken und so an mehreren hintereinander liegenden Perforationen die Druckdifferenz unterbrechen. Durch das Anpressen der Rollen der Saatgutablöseeinrichtung werden die Rollen an ihrer Oberfläche im Anlagebereich "abgeplattet". Somit ergibt sich eine einfache Ausgestaltung der erfindungsgemäßen Rolle der Saatgutablöseeinrichtung. Aufgrund der flexiblen und elastischen Ausgestaltung der Rolle der Saatgutablöseeinrichtung kann sich die Oberfläche der Rolle in dem Bereich, in dem sie gegen die Trommeloberfläche durch das Anpressen der Rolle gegen die Trommeloberfläche anliegt, sich in einfacher Weise verformen und an die Form der Trommeloberfläche anpassen, um so zumindest zwei oder mehr Perforationen in gewünschter Weise zur Unterbrechung der Druckdifferenz abzudecken.

Eine besonders gute Anpassung der Oberfläche durch Verformung der Rolle wird durch die gekrümmten speichenartigen Zwischenstücke erreicht.

Die gewünschte Verformung und eine Reduzierung des Drehmomentes zum Drehen der Rolle lässt sich dadurch erreichen, dass die Krümmung der Zwischenstücke in Drehrichtung der Rollen verläuft.

Ein vorteilhafter Verlauf der Speichen ergibt sich dadurch, dass die Breite der Speichen von innen nach außen zunimmt.

Um eine definierte Anlagefläche und -länge der Oberfläche der Rollen der Saatgutablöseeinrichtung zur Unterbrechung der Druckdifferenz an den abzudeckenden Perforationen der Saatguttrommel zum Ablösen der Saatkörner zu erreichen, ist vorgesehen, dass den Rollen Abstandshalteelemente zur Einhaltung eines bestimmten Abstandes der Drehachse der Rolle zur Innenfläche der Vereinzelungstrommel im Bereich der Perforationsreihen zugeordnet sind.

Eine einfache Zuordnung von Abstandshalteelementen und Rollen der Saatgutablöseeinrichtung wird dadurch erreicht, dass die Rollen und die Abstandshalteelemente auf einer gemeinsamen Achswelle angeordnet sind.

Eine vorteilhafte Ausgestaltung der Abstandshalteelemente ergibt sich dadurch, dass die Abstandshalteelemente als drehbar gelagerte Ringscheiben ausgebildet sind. Hierdurch lässt sich in einfacher Weise erreichen, wenn die Ringscheibe der Abstandshalteelemente und die Rollen der Saatgutablöseeinrichtung auf der gleichen Achswelle jeweils drehfest angeordnet sind, dass durch die Anlage der Ringscheibe an der Innenseite der Trommeloberfläche der Saatgutvereinzelungstrommel ein unterstützender Antrieb der Rollen der Saatgutablöseeinrichtung erfolgt.

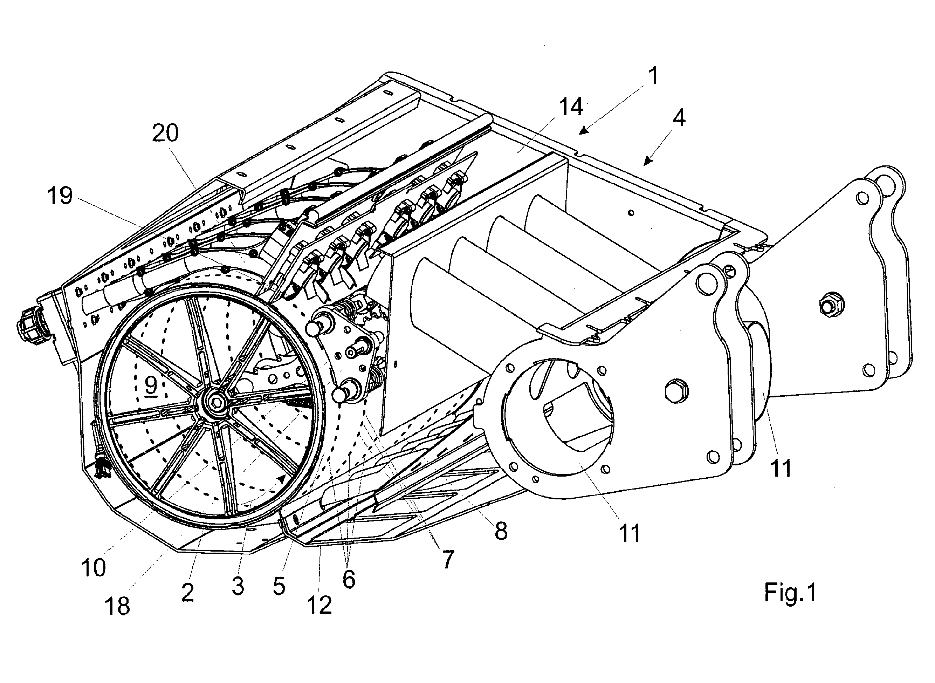

Weitere Einzelheiten der Erfindung sind der Beispielsbeschreibung und den Zeichnungen zu entnehmen. Hierbei zeigen
- Fig. 1: das Vereinzelungsgehäuse mit der Vereinzelungstrommel und der Vereinzelungsvorrichtung, ohne seitliche Lagerungselemente der Vereinzelungstrommel und ohne Saatgutvorratsbehälter der Einzelkornsämaschine in perspektivischer Ansicht, wobei die vordere Seitenwand abgenommen ist,

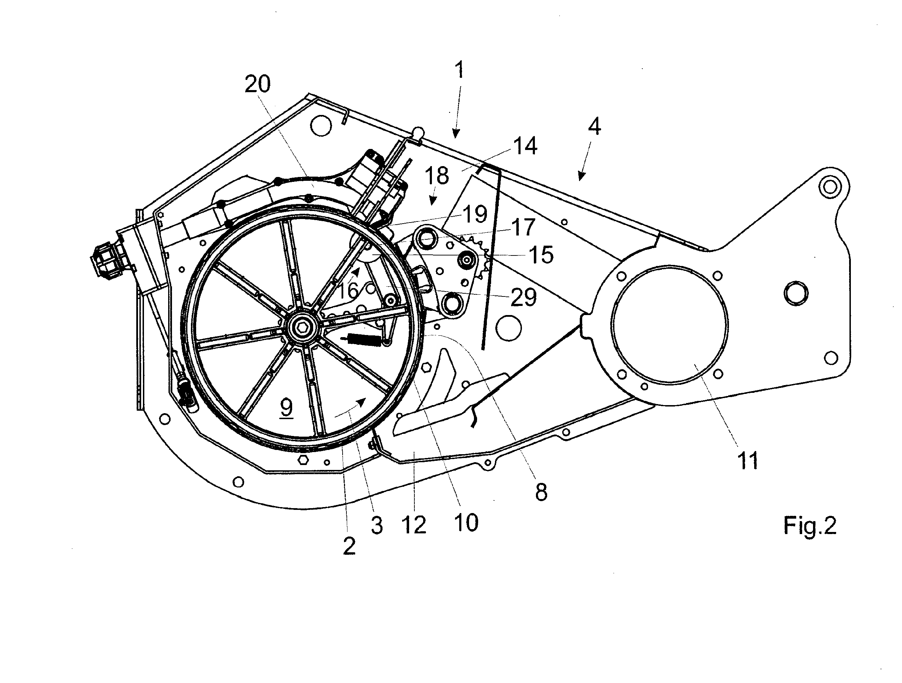

- Fig. 2: das Vereinzelungsgehäuse mit der Vereinzelungstrommel gemäß Fig. 1 in Seitenansicht,

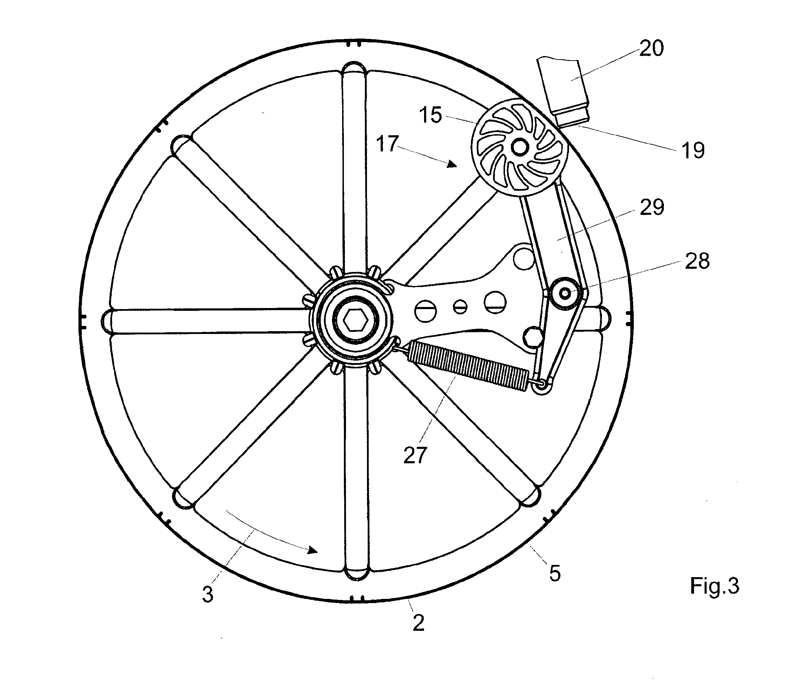

- Fig. 3: die Vereinzelungstrommel mit Rolle der Saatgutablöserolle und dem Anfangsbereich der Ausbringleitung in Seitenansicht,

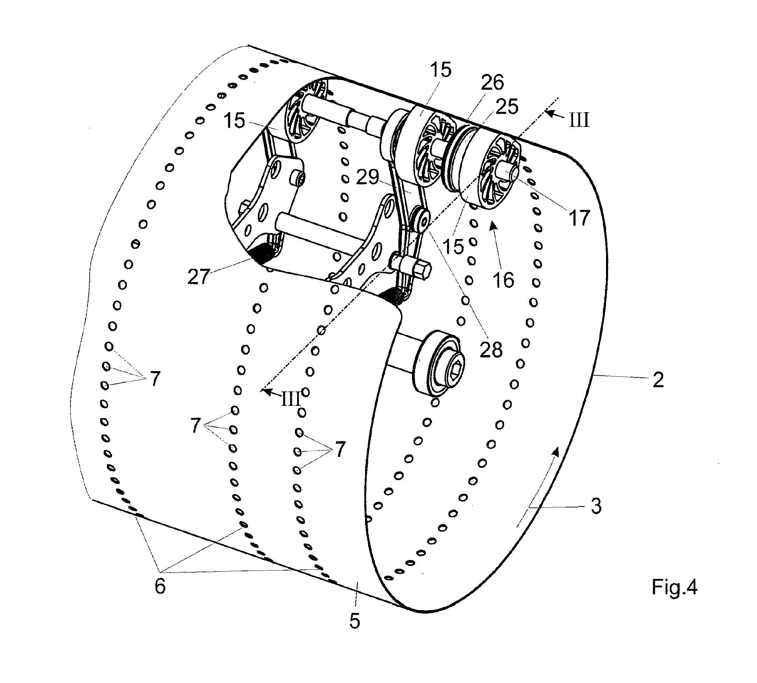

- Fig. 4: die Vereinzelungstrommel mit den Rolle der Saatgutablöseeinrictung in perspektivischer Ansicht,
- Fig. 5: die Vereinzelungstrommel mit Rolle der Saatgutablöserolle und dem Anfangsbereich der Ausbringleitung in Seitenansicht, in Teilansicht und vergrößertem Maßstab und

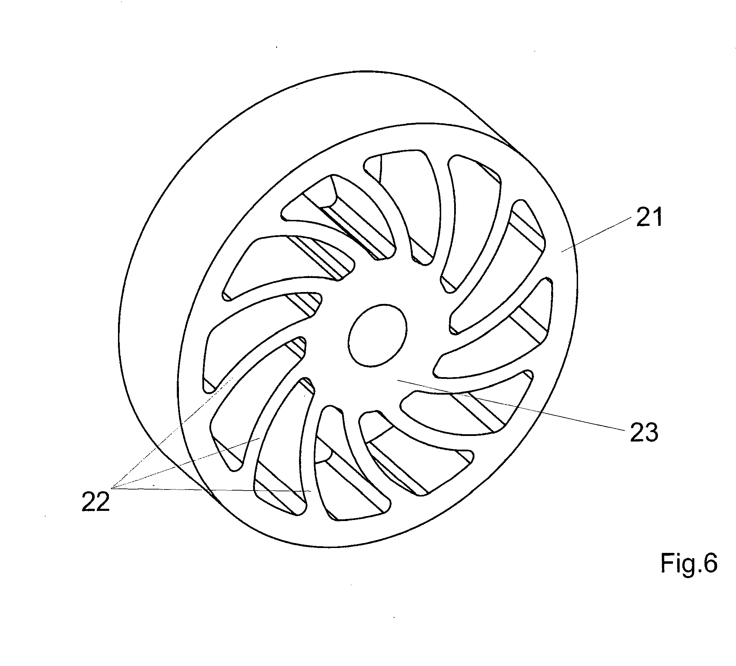

- Fig. 6: die Saatgutablöserolle in perspektivischer Ansicht.

Die Einzelkornsämaschine weist das Vereinzelungsgehäuse 1 mit der darin drehbar gelagerten und angetriebenen Vereinzelungstrommel 2 auf. Über eine nicht dargestellte Antriebsvorrichtung wird die Vereinzelungstrommel 2 in Pfeilrichtung 3 in Rotation versetzt. Oberhalb der Vereinzelungstrommel 2 befindet sich der Bereich mit dem Vorratsbehälter 4. In dem Umfangsmantel 5 der Vereinzelungstrommel 2 sind kreisförmig in Perforationsreihen 6 angeordnete Perforationen 7 angebracht. Der Vorratsbehälter 4 und das Vereinzelungsgehäuse 1 werden auf der Vereinzelungsseite 8 der Trommel 2 mit einem Überdruck beaufschlagt. Somit entsteht eine Druckdifferenz zwischen dem Innenraum 9 der Vereinzelungstrommel 2 und dem Außenbereich 8 der Vereinzelungstrommel 2 in deren Vereinzelungsbereich 10. Die Druckdifferenz wird durch ein nicht dargestelltes Gebläse erzeugt. Das Gebläse ist über den Anschlussstutzen 11 an das Vereinzelungsgehäuse 1 mittels einer Luftleitung angeschlossen. Wenn die Vereinzelungstrommel 2 durch den Saatgutvorrat, der sich im unteren Vorratsbereich 12 des Vereinzelungsgehäuses 1 im unteren Bereich des Vorratsbehälters 4 und zumindest in dem unteren Bereich der Vereinzelungstrommel 2 in dem Vereinzelungsgehäuse 1 befindet, geführt wird, lagern sich an der Perforationen 7 auf der Außenseite 8 der perforierten Trommel 2 Samenkörner 13 an. Die Seitenwände 14 des Vereinzelungsgehäuses 1 erstrecken sich parallel zur Bewegungsrichtung 3 der Trommel 1 und wirken zumindest annähernd abdichtend mit der Trommel 1 zusammen.

Des weiteren ist der Trommel 2 eine die an die Perforationen 7 anliegenden Druckdifferenz zum Ablösen der Samenkörner 13 von den Perforationen 7 unterbrechende und drehbar gelagerte Rollen 15 aufweisende Saatgutablöseeinrichtung 16 im Innenraum 9 der Trommel 2 zugeordnet. Die Rollen 15 dieser Saatgutablöseeinrichtung 16 sind drehfest auf einer am Vereinzelungsgehäuse 1 drehbar angeordneten Welle 17 gelagert. Die Rollen 15 befinden sich jeweils im bereich der Perforationsreihen 6 zum Abdecken der Perforationen 7.

Im Vereinzelungsbereich 10 der Trommel 2 ist zwischen dem Saatgutvorratsbereich 12 und dem Bereich, dem die Saatgutablöseeinrichtung 16 zugeordnet ist, eine Abstreifereinrichtung 18 angeordnet, um Doppelbelegungen von Saatkörnern 13 an den Perforationen 7 zu vermeiden.

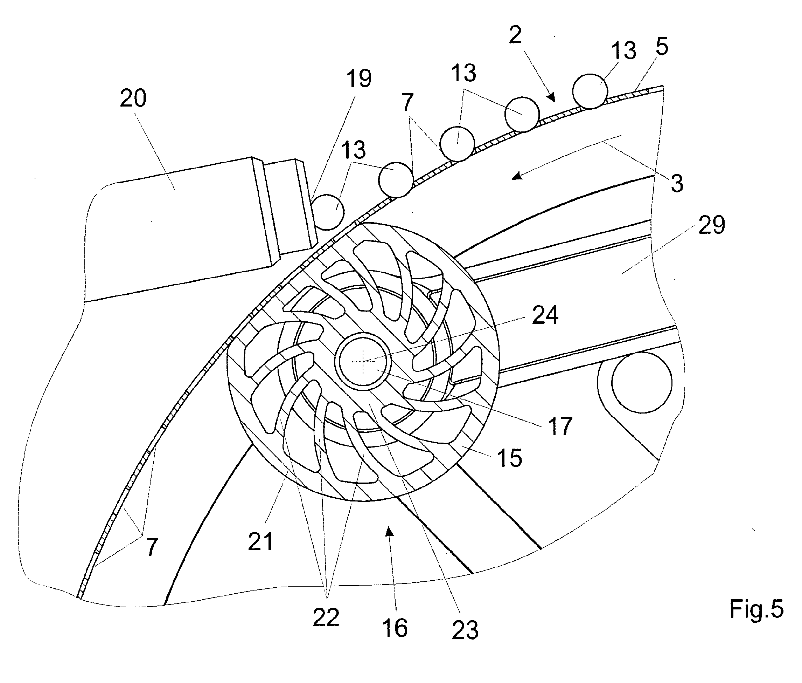

Weiterhin weist die Einzelkornsämaschine bis an die Trommeloberfläche der Trommel 2 heranreichende, mit Einmündungsöffnungen 19 versehene Ausbringleitungen 20 auf, welche zu Ausbringelementen, wie beispielsweise Säscharen, führen. Mittels dieser Ausbringleitungen 20 sind die von der Vereinzelungstrommel 2 vereinzelten Saatkörner den Ausbringelementen mittels eines Luftstromes über die Ausbringleitungen 20 zuführbar. Hierbei reicht jeweils das eine Ende der Ausbringleitungen 20 mit ihrer jeweiligen Einmündungsöffnung 19 bis an die Trommeloberfläche der Trommel 2 heran, um so eine sichere Übergabe des vereinzelten Saatkornes über die jeweilige Einmündungsöffnung 19 in die jeweilige Ausbringleitung 20 zu gewährleisten, wie Fig. 5 zeigt.

Die Rollen 15 der Saatgutablöseeinrichtung 16 weisen einen flexiblen und/oder elastischem Außenring 21 auf. Der elastische und/oder flexible Außenring 21 ist über elastische und/oder flexible speichenartige Zwischenstücke 22 mit einer auf der Welle 17 der drehfest angeordneten Nabe 23 verbunden. Die Rollen 15 können sich um die Längsachse 24 der Welle 17 aufgrund der drehbaren Lagerung der Welle 17 drehen. Die speichenartige Zwischenstücke 21 sind in Drehrichtung 23 der Rolle 15 gekrümmt ausgebildet. Somit ist jede Rolle 15 zumindest in ihrem äußeren Umfangsbereich flexibel und/oder elastisch ausgebildet. Die Breite der Speichen 22 nimmt von innen nach außen zu.

Zumindest zwischen einigen der Rollen 15 der als Abdeckeinrichtung ausgebildeten Saatgutablöseeinrichtung 16 sind Abstandshalteelemente 25 zur Einhaltung eines bestimmten Abstandes der Drehachse 24 der Welle 17, auf der die Rollen 15 angeordnet sind, zur Innenfläche der Vereinzelungstrommel 2 im Bereich der Perforationsreihen 6 zugeordnet. Somit sind die Rollen 15 und die Abstandshalteelemente 25 auf einer gemeinsamen Welle 17 angeordnet. Die Abstandshalteelemente 25 sind als drehbar gelagerte Ringscheibe ausgebildet. Hierbei sind die Ringscheiben 25 drehfest mit der drehbar gelagerten Welle 17 verbunden.

Die Rollen 15 weisen einen größeren Durchmesser als die Ringscheiben 25 auf. Die Ringscheiben 25 treiben aufgrund des Reibschlusses zwischen der Innenfläche der Trommel 2 und der Umfangsfläche der Ringscheiben die Rollen 15 der Abdeckeinrichtung 16 an. Hierdurch wird der Schlupf zwischen den Rollen 15 und der Trommel 2 erheblich reduziert. Auf der Lauffläche der Ringscheiben 25 ist ein schmaler Ring 26, beispielsweise ein Gummi- und/oder Kunststoffring angeordnet, um eine bessere Drehkraftübertragung von der Trommel 2 auf die jeweilige Ringscheibe 25 zu gewährleisten.

Über die Federeinrichtung 27 und der gelenkig mittels des Gelenkes 28 gelagerten Hebelanordnung 29, an welcher die Welle 17, auf welcher die Rollen 15 der Saatgutablöseeinrichtung 16 und die als Ringscheiben 25 ausgebildeten Abstandshalteelemente angeordnet sind, angeordnet ist, werden die Rollen 15 und die Ringscheiben 27 gegen die Innenfläche der Trommel 2 gepresst und/oder gedrückt. Hierbei passen sich die Oberflächen der Rollen 15 aufgrund ihrer flexiblen und/oder elastischem Ausbildung in ihrem äußeren Bereich 21 und der elastischen und oder flexiblen speichenartigen Zwischenstücke 22 sich im Anlagebereich an die Trommel 2 an, wie Fig. 5 zeigt; die Rolle 15 wird im gegen die Innenfläche der Trommel 2 angepressten Bereich abgeplattet. Dies ist dadurch möglich, dass die Ringscheiben 25 einen kleineren Durchmesser als die Rollen 15 aufweisen. Hierdurch deckt der abgeplattete Bereich der Rolle im Ausführungsbeispiel, wie in Fig. 5 dargestellt ist, insgesamt drei hintereinander liegende Perforationen 7 ab.

## Patentansprüche

1. Pneumatische Einzelkornsämaschine mit einem einen Saatgutvorratsbehälter aufweisenden Gehäuse (1) und zumindest einer drehbar angetriebenen Vereinzelungstrommel (2), in deren Umfangsmantel (5) kreisförmig in Perforationsreihen (6) angeordnete Perforationen (7) angebracht sind, einem Gebläse, mittels welchem eine Druckdifferenz zwischen dem Innenraum (9) der Vereinzelungstrommel (2) und dem Außenbereich (8) der Vereinzelungstrommel (2) erzeugbar ist, so dass, wenn die Vereinzelungstrommel durch den Saatgutvorrat geführt wird, sich an den Perforationen (7) auf der Außenseite (8) der perforierten Trommel(2) Samenkörner (13) anlagern, wobei das Gehäuse (1) zwei voneinander beabstandete Seitenwände (14) aufweist, die sich parallel zur Bewegungsrichtung der Trommel (2) erstrecken und mit der Trommel (2) zumindest annähernd abdichtend zusammenwirken, wobei eine die an die Perforationen (7) angelegte Druckdifferenz zum Ablösen der Saatkörner (13) von den Perforationen (7) unterbrechende als die drehbar gelagerte Rolle (15) ausgebildete Abdeckeinrichtung im Innenraum (9) der Trommel (2) angeordnet ist, wobei im Bereich der Abdeckeinrichtung (15) und den Perforationsreihen (7) jeweils das eine Ende einer Ausbringleitung (20) mit ihrer Einmündungsöffnung bis an die Trommeloberfläche zumindest annähernd heranreichend angeordnet ist, wobei die Rolle (15) zumindest in ihrem äußeren umlaufenden Bereich (21) flexibel und/oder elastisch ausgebildet ist, wobei die Rolle (15) aus einem flexiblen und/oder elastischem Außenring (21) besteht, wobei der Außenring (21) über speichenartige Zwischenstücke (22) mit einer drehbar gelagerten Nabe (23) verbunden ist, **dadurch gekennzeichnet, dass** die speichenartigen Zwischenstücke (22) gekrümmt ausgebildet sind.

2. Einzelkornsämaschine nach Anspruch, **dadurch gekennzeichnet, dass** die Krümmung der speichenartigen Zwischenstücke (22) in Drehrichtung der Rollen (15) verläuft.

3. Einzelkornsämaschine nach zumindest einem der vorstehenden Ansprüche, **dadurch gekennzeichnet, dass** die Breite der Speichen (22) von innen nach außen zunimmt.

4. Einzelkornsämaschine nach zumindest einem der vorstehenden Ansprüche, **dadurch gekennzeichnet, dass** den Rollen (15) Abstandshalteelemente (25) zur Einhaltung eines bestimmten Abstandes der Drehachse (24) der Rolle (15) zur Innenfläche der Vereinzelungstrommel (2) im Bereich der Perforationsreihen (6) zugeordnet sind.

5. Einzelkornsämaschine nach Anspruch 4, **dadurch gekennzeichnet, dass** die Rollen (15) und die Abstandshalteelemente (25) auf einer gemeinsamen Achswelle (17) angeordnet sind.

6. Einzelkornsämaschine nach Anspruch 4, **dadurch gekennzeichnet, dass** die Abstandshalteelemente (25) als drehbar gelagerte Ringscheiben ausgebildet sind.

## Claims

1. Pneumatic single grain seed drill having a housing (1) having a seed storage container, and at least one rotatably driven singling drum (2), in the circumferential lateral surface (5) of which there are provided perforations (7) arranged in rows (6) of perforations in a circular manner, a fan, by means of which a pressure difference between the interior (9) of the singling drum (2) and the exterior region (8) of the singling drum (2) is creatable, such that, when the singling drum is guided through the seed store, grains (13) are taken up at the perforations (7) on the outer side (8) of the perforated drum (2), wherein the housing (1) has two spaced-apart side walls (14) which extend parallel to the direction of movement of the drum (2) and interact with the drum (2) in an at least approximately sealing manner, wherein a covering device for interrupting the pressure difference applied at the perforations (7) in order to detach the grains (13) from the perforations (7), said covering device being in the form of the rotatably mounted roller (15), is arranged in the interior (9) of the drum (2), wherein, in the region of the covering device (15) and the rows (6) of perforations, in each case one end of a dispensing line (20) is arranged with its mouth opening extending at least approximately as far as the drum surface, wherein the roller (15) is formed in a flexible and/or elastic manner at least in its outer circumferential region (21), wherein the roller (15) consists of a flexible and/or elastic outer ring (21), wherein the outer ring (21) is connected to a rotatably mounted hub (23) via spoke-like intermediate pieces (22), **characterized in that** the spoke-like intermediate pieces (22) are formed in a curved manner.

2. Single grain seed drill according to Claim 1, **characterized in that** the curvature of the spoke-like intermediate pieces (22) extends in the direction of rotation of the rollers (15).

3. Single grain seed drill according to at least one of the preceding claims, **characterized in that** the width of the spokes (22) increases from the inside towards the outside.

4. Single grain seed drill according to at least one of the preceding claims, **characterized in that** the rollers (15) are assigned spacer elements (25) for maintaining a particular spacing of the rotation axis (24) of the roller (15) from the inner surface of the singling drum (2) in the region of the rows (6) of perforations.

5. Single grain seed drill according to Claim 4, **characterized in that** the rollers (15) and the spacer elements (25) are arranged on a common axle shaft (17).

6. Single grain seed drill according to Claim 4, **characterized in that** the spacer elements (25) are in the form of rotatably mounted annular discs.

## Revendications

1. Semoir monograine pneumatique, comportant un boîtier (1) comprenant un réservoir de semences et au moins un tambour séparateur (2) entraîné en rotation dans l'enveloppe périphérique (5) duquel sont pratiquées des perforations (7) disposées de manière circulaire en rangées de perforations (6), une soufflante au moyen de laquelle une différence de pression peut être produite entre l'espace intérieur (9) du tambour séparateur (2) et la région extérieure (8) du tambour séparateur (2), de sorte que, lorsque le tambour séparateur est guidé à travers la réserve de semences, des graines de semences (13) s'accumulent au niveau des perforations (7) sur le côté extérieur (8) du tambour perforé (2), le boîtier (1) comprenant deux parois latérales (14) espacées l'une de l'autre qui s'étendent parallèlement à la direction de déplacement du tambour (2) et qui coopèrent avec le tambour (2) de manière au moins approximativement étanche, un dispositif de recouvrement interrompant la différence de pression appliquée aux perforations (7) pour décrocher les graines de semences (13) des perforations (7) et réalisé sous la forme du rouleau (15) monté à rotation étant disposé dans l'espace intérieur (9) du tambour (2) et, dans la région du dispositif de recouvrement (15) et des rangées de perforations (6), l'une des extrémités d'une conduite de distribution (20) étant respectivement disposée de manière à ce que son ouverture d'embouchure s'étende au moins approximativement jusqu'à la surface du tambour, le rouleau (15) étant réalisé de manière flexible et/ou élastique dans sa région périphérique extérieure (21), le rouleau (15) étant constitué d'une bague extérieure (21) flexible et/ou élastique, la bague extérieure (21) étant reliée par le biais de pièces intermédiaires (22) de type rayons à un moyeu (23) monté à rotation, **caractérisé en ce que** les pièces intermédiaires (22) de type rayons sont réalisées de manière courbée.

2. Semoir monograine selon la revendication 1, **caractérisé en ce que** la courbure des pièces intermédiaires (22) de types rayons s'étend dans le sens de rotation des rouleaux (15).

3. Semoir monograine selon au moins l'une quelconque des revendications précédentes, **caractérisé en ce que** la largeur des rayons (22) augmente de l'intérieur vers l'extérieur.

4. Semoir monograine selon au moins l'une quelconque des revendications précédentes, **caractérisé en ce que** des éléments d'écartement (25) pour maintenir une distance déterminée de l'axe de rotation (24) du rouleau (15) par rapport à la surface intérieure du tambour séparateur (2) dans la région des rangées de perforations (6) sont associés aux rouleaux (15).

5. Semoir monograine selon la revendication 4, **caractérisé en ce que** les rouleaux (15) et les éléments d'écartement (25) sont disposés sur un arbre d'essieu commun (17).

6. Semoir monograine selon la revendication 4, **caractérisé en ce que** les éléments d'écartement (25) sont réalisés sous forme de disques annulaires montés à rotation.
